# EUROPEAN PATENT SPECIFICATION

(11) **EP 1 848 159 B1**
(45) Date of publication and mention of the grant of the patent: **10.04.2013**
(21) Application number: 06705627.5
(22) Date of filing: 07.02.2006
(51) Int. Cl.: H04L 12/46, H04L 12/24, G06F 17/30

(54) **A METHOD FOR THE LOCAL SUB-NETWORK DISCOVERING THE DESTINATION BORDER OBJECT OF THE CORRESPONDING SUB-NETWORK AND THE DEVICE THEREOF**
VERFAHREN UND VORRICHTUNG ZUR ERMITTLUNG DES BESTIMMUNGS-GRENZOBJEKTES DES ENTSPRECHENDEN TEILNETZWERKS DURCH DAS LOKALE TEILNETZWERK
METHODE POUR QUE LE SOUS-RESEAU LOCAL DECOUVRE L'OBJET DE BORD DE DESTINATION DU SOUS-RESEAU CORRESPONDANT ET DISPOSITIF POUR CELA

(30) Priority: 07.02.2005 CN 200510007685
(43) Date of publication of application: 24.10.2007
(73) Proprietor: Huawei Technologies Co., Ltd., Longgang District, Shenzhen Guangdong 518129 (CN)
(72) Inventor: YANG, LI, Huawei Technologies Co.,Ltd., Shangai 201206 (CN)
(74) Representative: Kreuz, Georg Maria
(86) International application number: PCT/CN2006/000206
(87) International publication number: WO 2006/081777

(56) References cited:
- EP-A- 0 938 217
- JP-A- 11 243 399
- US-A- 5 633 866
- US-A1- 2004 151 206
- PERKINS C (EDITOR): "ip mobility support, rfc 2002" INTERNET CITATION, [Online] October 1996 (1996-10), pages 1-55, XP002233555 Retrieved from the Internet: URL:http://www.faqs.org/rfc/rfc2002.htm> [retrieved on 2003-02-27]
- SHIM E ET AL: "Secure Candidate Access Router Discovery" WIRELESS COMMUNICATIONS AND NETWORKING, 2003. WCNC 2003. 2003 IEEE 16-20 MARCH 2003, PISCATAWAY, NJ, USA,IEEE, vol. 4, 16 March 2003 (2003-03-16), pages 1819-1824, XP002323683 ISBN: 0-7803-7700-1

## Description

### Field of the Invention

The present invention relates to sub-network information interaction technology, and more particularly, to a method and an apparatus for searching for a target border object in a relevant sub-network.

### Background of the Invention

A mobile telecommunication network includes multiple sub-networks. Network element devices of different sub-networks are usually provided by different manufacturers. The sub-networks are not independent of each other, but may have neighboring relations with each other and be configured with corresponding network management configuration information, i.e. relevant configuration information which is called border configuration information in this disclosure. A Domain Manager (DM) of a sub-network may provide management for the border configuration information of the sub-network. In a scenario of two sub-networks, border objects are objects of one sub-network that has relations to one or more managed objects of the other sub-network. For example, border objects may be external neighboring cells of two sub-networks respectively or external links to each other, e.g., lucs link terminating at two sub-networks, Iups link terminating at two sub-networks, Iur link terminating at two sub-networks, or other links between any two sub-networks. In case of neighboring border objects, when the configuration information of one border object changes, the sub-network to which the border object belongs notifies a neighboring sub-network that the configuration information of the border object has changed. The neighboring sub-network may update the configuration information of the corresponding border object. Thus, synchronization of the configuration information of the neighboring border objects is maintained.

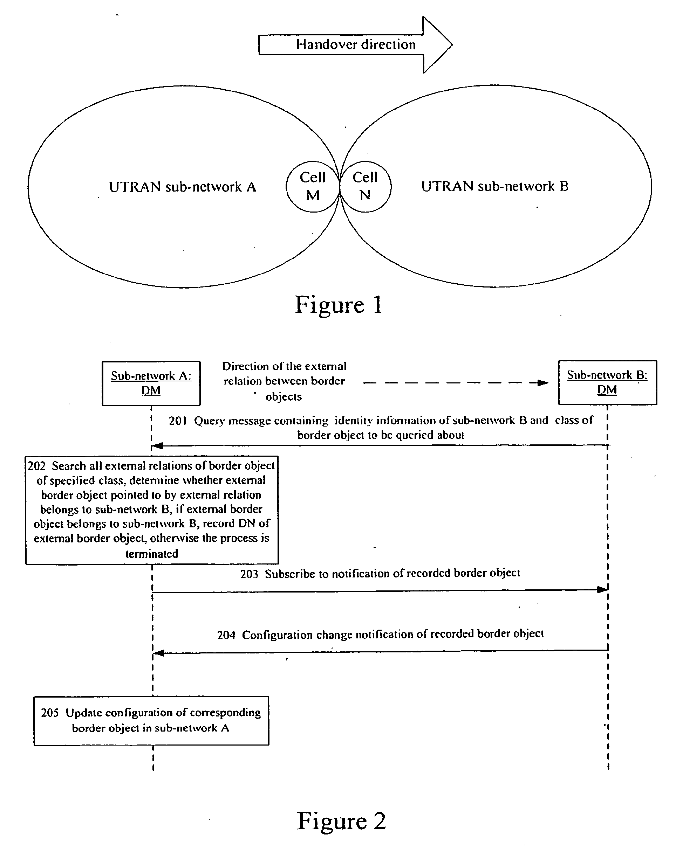

Figure 1 is a schematic diagram illustrating a network structure of a handover relation of neighboring cells between different Universal Terrestrial Radio Access Network (UTRAN) sub-networks. For example, as shown in Figure 1, Cell M of UTRAN sub-network A and Cell N of UTRAN sub-network B are two neighboring cells; UTRAN sub-network A needs the border configuration information of Cell N of UTRAN sub-network B while UTRAN sub-network B needs the border configuration information of Cell M of UTRAN sub-network A. When user equipment is handed over from Cell M of UTRAN sub-network A to Cell N of UTRAN sub-network B, the handover direction is from Cell M to Cell N. The handover relation from Cell M to Cell N is an external relation, and Cell M is called as the source cell of the external relation while Cell N is called as the target cell of the external relation. Before the handover, the source Cell M maintains the synchronization of border configuration information between Cell M and Cell N by the means that the source Cell M is notified of any changing of the border configuration information of the target Cell N in time. The synchronization is the basis of successful handover.

For example, in a scenario of two sub-networks, supposing one sub-network is a core network and the other is an access network, both sub-networks need configuration of the lups link terminating at the two sub-networks. The external relation of the Iups link terminating at the two sub-networks is an information transmission relation. Supposing that information is transmitted from sub-network A to sub-network B, the Iups link end of sub-network A is the source Iups link of the information transmission relation while the Iups link end of sub-network B is the target Iups link of the information transmission relation. When sub-network B modifies the configuration of a link, such as addresses of two terminals of a link, sub-network A is required to modify the configuration of the link accordingly to ensure the normal interaction between the two sub-networks.

A technical scheme of re-using 3GPP Interface between the Networks (Itf-N) is put forward for transmitting the border configuration information of sub-network B to sub-network A. In other words, the DM of a sub-network can reuse the operations of the 3GPP Itf-N possibly with a minimum modification to automatically transmit network management configuration information between different sub-networks. What differs from the operations of the 3GPP Itf-N is that the two parties of the operations are the DM of a sub-network and the DM of another sub-network other than a DM and a Network Management System (NMS).

As shown in Figure 1, according to the conventional technical scheme, sub-network A subscribes to a notification from the relevant sub-network B using the subscription operation in the Notification Integration Reference Point (i.e. NotificationIRP) class of the Itf-N. The notification can make border configuration information change, and is usually notifications defined in the Kernel Configuration Management Integration Reference Point (i.e. KerneICMIRP), such as an object creation notification, an object deletion notification, an attribute value change notification, a "notifyCMSynchronizationRecommended'' notification, etc. When the border configuration information of the relevant sub-network B changes, sub-network B sends to sub-network A a corresponding notification indicating the change of the border configuration information. Upon receiving the corresponding notification, sub-network A updates corresponding border configuration information in sub-network A according to the change of the border configuration information to synchronize with changing of sub-network B.

However, the conventional technical scheme above does not disclose how a local sub-network (e.g. sub-network A) automatically searches for a target border object in a relevant sub-network (e.g. sub-network B) so as to subscribe to a configuration change notification of the target border object from the relevant sub-network. The target border object has an external relation with a border object in the local sub-network. In the conventional technical scheme, manual operations are needed. The target border object in the relevant sub-network can only be searched for manually according to network topology or a configuration relation list, and the configuration change notification of the target border object is subscribed to accordingly from the relevant sub-network, where the target border object has an external relation with the border object in the local sub-network. Such an operation is less efficient and causes even more manual work in a relatively larger network, which wastes human resources and indirectly increases the costs.

Disclosed in PERKINS C (EDITOR): "ip mobility support, rfc 2002" October 1996, pages 1-55, retrieved from the Internet: URL:http://www.faqs.org/rfc/rrc2002.htm is protocol enhancements that allow transparent routing of IP datagrams to mobile nodes in the Internet. Each mobile node is always identified by its home address, regardless of its current point of attachment to the Internet. While situated away from its home, a mobile node is also associated with a care-of address, which provides information about its current point of attachment to the Internet. The protocol provides for registering the care-of address with a home agent. The home agent sends datagrams destined for the mobile node through a tunnel to the care-of address. After arriving at the end of the tunnel, each datagram is then delivered to the mobile node.

Disclosed in SHIM E ET AL: "Secure Candidate Access Router Discovery" WIRELESS COMMUNICATIONS AND NETWORKING 2003. IEEE 16-20 MARCH 2003, PISCATAWAY, NJ, USA, vol. 4, pages 1819-1824, ISBN: 0-7803-7700-1 is the candidate access router (CAR) discovery protocol which is designed for use in wireless IP networks to dynamically collect information about neighboring access routers and their capabilities. This capability enables mobile nodes to dynamically execute low-latency hand-offs and to intelligently select a target access router.

Disclosed in European patent application 0938217 is a mobile IP communication scheme in which the mobile computer can be operated using the mobile communication protocol such as Mobile IP even in the case where the home network is operated by the dynamic address allocation protocol such as DHCP. The current location registration message to be transmitted by the mobile computer from the visited site to the mobile computer management device contains an information indicating that the dynamic address allocation has been received at the home network and an information capable of identifying the mobile computer, and the mobile computer management device carries out exchanges with the dynamic address management server on behalf of the mobile computer, so that the mobile computer which has received the dynamic address allocation at the home network can be operated at the visited site by using the mobile communication protocol.

### Summary of the Invention

In view of the above, a primary objective of the present invention is to provide a method, as claimed in claim 1, for a first sub-network to search for a target border object in a second sub-network so that the first sub-network can automatically search in the second sub-network for the target border object having an external relation with a border object in the first sub-network. By this way, the automatic efficiency of the communication management system is improved. Furthermore manual workload is reduced and thus the cost is reduced.

Another objective of the present invention is to provide an apparatus, as claimed in claim 10, for a first sub-network to search for a target border object in a second sub-network so that the first sub-network can automatically search in the second sub-network for the target border object having an external relation with a border object in the first sub-network. The apparatus will improve the automatic efficiency of the communication management system, reduce manual workload and thus reduce the cost.

A method for searching for by a first sub-network a target border object in a second sub-network related to the first sub-network includes:
obtaining, by a Device Manager, DM, of the first sub-network, identifier information of the second sub-network (201; 301, 302) from the second sub-network (201; 301, 302), wherein the first sub-network and the second sub-network have neighboring relations with each other and are configured with corresponding network management configuration information called border configuration information managed by the corresponding DM of each sub-network;
searching, by the DM of the first sub-network, for all external relations of all border objects of the first sub-network(202; 303), wherein a border object of the first sub-network is an object of the first sub-network having external relations to one or more managed target objects of the first sub-network or other sub-networks;
determining that an external border object pointed to by the external relation is a target border object of the first sub-network in the second sub-network by determining that an identifier parameter of the external border object matches the identifier information of the second sub-network (202; 303);
sending, by the DM of the first sub-network, to the DM of the second sub-network a request for subscribing to a configuration change notification of the target border object (203; 304);
receiving, by the DM of the first sub-network, the configuration change notification sent by the second sub-network after the second sub-network confirms the request for subscribing and configuration of the target border object in the second sub-network changes (204; 305); and
updating, by the DIM of the first sub-network, based on the configuration change notification, the configuration of the target border object of the external relation of the corresponding border object in the first sub-network (205; 306).

Preferred embodiments are covered by the dependent claims.

Preferable, the external border object pointed to by the external nation belongs to the second sub-network if an identifier parameter of the external border object matches the identifier information of the second sub-network.

Preferably, the method further includes:
obtaining the border object class; and
determining that the class of the border object of the first sub-network to be queried of is identical with the border object class.

Preferably, the obtaining identifier information of the second sub-network and the obtaining the border object class include:
obtaining the identifier information of the second sub-network and the border object class which are contained in a query message sent by the second sub-network to the first sub-network.

Preferably, the obtaining identifier information of a second sub-network and the determining that an external border object pointed to by the external relation is a target border object of the first sub-network in the second sub-network are performed by an operation of inquiring about whether there is a border network resource model.

Preferably, the obtaining identifier information of the second sub-network and the obtaining the border object class includes:
sending, by the first sub-network, to the second sub-network a query message to inquire about the identifier information of the second sub-network and the border object class; and
receiving the identifier information of the second sub-network and the border object class which are sent when the query message is received by the second sub-network.

Preferably, the first sub-network is an initiator of the external relation of the border object, and the second sub-network is a terminal of the external relation of the border object.

Preferably, the identifier parameter of the external border object pointed to by the external relation matches the identifier information of the second sub-network if the identifier parameter of the external border object pointed to by the external relation includes the identifier information of the second sub-network.

Preferably, the identifier information of the second sub-network is a Distinguished Name (DN) of the second sub-network; or
the identifier information of the second sub-network is a Distinguished Name (DN) of a border object in the second sub-network.

Preferably, the border object is a cell, and the external relation is a handover relation; or the border object is a link between the first sub-network and the second sub-network, and the external relation is an information transmission relation.

An apparatus in a first sub-network for searching for a target border object in a sub-network includes:
a searching unit(42), configured to search for all external relations of all border objects of a first sub-network, wherein a border object of the first sub-network is an object of the first sub-network having external relations to one or more managed target objects of the first sub-network or other sub-networks;
a communication unit(41), configured to obtain identifier information of the second sub-network from the second sub-network, wherein the first sub-network and the second sub-network have neighboring relations with each other and are configured with corresponding network management configuration information called border configuration information managed by the corresponding DM of each sub-network;
a first determination unit(43), configured to determine whether an identifier parameter of an external border object pointed to by the external relation matches the identifier information of the second sub-network; and
a second determination unit(44), configured to determine, based on a determination result of the first determination unit(43), whether the external border object pointed to by the external relation of the border object in the first sub-network is a target border object of the first sub-network in the second sub-network;
a sending unit, configured to send to the DM of the second sub-network a request for subscribing to a configuration change notification of the target border object;
a receiving unit, configured to receive the configuration change notification sent by the second sub-network after the second sub-network confirms the request for subscribing and configuration of the target border object in the second sub-network changes; and
an updating unit, configured to update the configuration of the target border object of the external relation of the corresponding border object in the first sub-network, based on the configuration change notification.

Preferably, the first determination unit determines that the external border object pointed to by the external relation belongs to the second sub-network if an identifier parameter of an external border object pointed to by the external relation matches the identifier information of the second sub-network.

Preferably, the apparatus further includes:
a second communication unit, for obtaining the border object class; where
the searching unit includes: a limit management unit, for limiting, before searching for an external relation of a border object in the first sub-network, the class of the border object to be queried of to the border object class.

Preferably, the identifier information of the second sub-network is Distinguished Name (DN) of the second sub-network; or the identifier information of the second sub-network is Distinguished Name (DN) of a border object in the second sub-network.

Preferably, the border object is a cell, and the external relation is a handover relation; or the border object is a link between the first sub-network and the second sub-network, and the external relation is an information transmission relation.

According to embodiments of the present invention, the information interaction between sub-networks enables the first sub-network to obtain the identifier information of the second sub-network. Furthermore, the first sub-network searches the external relations of the border object in the first sub-network to obtain an identifier parameter of an external border object pointed to by an external relation, and determines whether the external border object pointed to by the external relation belongs to the second sub-network based pm the identifier information. The first sub-network determines that the external border object is the target border object of the first sub-network in the second sub-network if the external border object pointed to by the external relation belongs to the second sub-network. Therefore the embodiments of the present invention enable the first sub-network to automatically search in the second sub-network for the target border object having an external relation with the border object in the first sub-network. Thus the sub-network initiating the external relation can determine which border object's configuration change notification should be subscribed to, and determine which relevant sub-network the border object is in. Thus the configuration change notification of the target border object in the second sub-network is subscribed to, and the first sub-network can learn the change of configuration, and update the configuration of the target border object in time according to the configuration change notification when the configuration information of the target border object changes. Therefore the automatic efficiency of the communication management system is improved, and manual workload and the cost are reduced.

### Brief Description of the Drawings

Figure 1 is a schematic diagram illustrating a network structure of a handover relation of neighboring cells between different UTRAN sub-networks.
Figure 2 is a flowchart illustrating a method for searching for a target border object in accordance with an embodiment of the present invention.
Figure 3 is a flowchart illustrating a method for searching for a target border object in accordance with an embodiment of the present invention.
Figure 4 is a schematic diagram illustrating an apparatus in accordance with an embodiment of the present invention.

### Detailed Description of the Invention

Embodiments of the present invention will be further explained with reference to the accompanying drawings.

According to an embodiment of the present invention, a local sub-network obtains identifier information of a relevant sub-network and searches all external relations of border objects in the local sub-network to determine whether an identifier parameter of an external border object pointed to by an external relation matches the identifier information of the relevant sub-network. The local sub-network determines that an external border object is the target border object of the local sub-network in the relevant sub-network if the identifier parameter of the external border object matches the identifier information of the relevant sub-network.

The external relation in embodiments of the present invention may be a handover relation or an information transmission relation. If the border object is a cell, the external relation of the cell is the handover relation. When the border object is a border link lucs, a border link Iups, a signaling link, an Iur link, or any other links between sub-networks, or any combination of the links above, the external relation is the information transmission relation.

A communication network includes multiple sub-networks. A sub-network may function as a local sub-network or as a relevant sub-network to other sub-networks. Thus the external relation in the embodiment of the present invention is directional: the local sub-network is the source sub-network of the external relation, i.e. the initiator of the external relation, and the relevant sub-network is the target sub-network of the external relation, i.e. the terminal of the external relation.

For example, when the border object is a cell, the external relation between sub-networks is the handover relation, and a border cell initiating the handover is the border cell in the source sub-network, a border cell accepting the handover is the border cell in the target sub-network.

When the border object is a link, the external relation between sub-networks is the information transmission relation, the sub-network initiating the information transmission on the link is called as the source sub-network and the sub-network accepting the information transmission is called as the target sub-network.

If either of two Domain Managers (DMs) needs to transmit information to the other, the external relation between the two DMs is bidirectional.

If the border object in the source sub-network would initiate an external relation to the border object in the target sub-network, the border object in the source sub-network should obtain the correct configuration information of the border object in the target sub-network. For example, the border cell in the source sub-network initiating the handover should obtain the correct configuration information of the border cell in the target sub-network for successful handover. For another example, the signaling point in the source sub-network initiating signaling transmission should obtain the correct configuration information of the signaling point in the target sub-network to perform successful signaling transmission.

Therefore, the border object in the source sub-network should learn the change of the configuration of the border object in the target sub-network as soon as possible to maintain the configuration synchronization between the border object in the source sub-network and the border object in the target sub-network. For the implementation of the above, the source sub-network subscribes to a configuration change notification of relevant border objects from the target sub-network.

Embodiments of the present invention describe how the sub-network initiating the external relation determines to subscribe to which border object's configuration change notification should be subscribed to and determines which relevant sub-network the border object is in.

In an embodiment of the present invention, the method for searching for a target border object is illustrated based on the handover relation between sub-networks related to each other. Figure 2 is a flowchart illustrating a method for searching for a target border object in accordance with this embodiment. As shown in Figure 2, sub-network A and sub-network B are two terminals of an external relation. When the border object is a cell, sub-network A includes the source cell of the handover and sub-network B includes the target cell of the handover. When the border object is a link, sub-network A is the initiator of the information transmission, i.e. the source sub-network of the information transmission, and sub-network B is the terminal of the information transmission, i.e. the target sub-network of the information transmission.

In the following embodiments, it is supposed that different DMs in the network management system adopt protocols of 3GPP Itf-N specification for communications.

It should be acknowledged by those familiar with 3GPP Itf-N specification that each sub-network should obtain an instance of Entry Point Integration Reference Point (EPIRP) interface of another sub-network before exchanging information between different sub-networks, and different sub-networks communicate with each other through operations of the EPIRP interface. Obtaining the EPIRP interface of another sub-network is a part of the common knowledge in the prior art and will not be explained herein. It is regarded unanimously here that different sub-networks can communicate with each other.

The interaction and operation between sub-networks are performed by the Domain Managers (DMs) of the sub-networks and the method for searching for a target border object in accordance with an embodiment of the present invention is described as follows.

Block 201: The DM of sub-network B sends a query message to the DM of sub-network A, the query message contains a border object instance (e.g. borderObjectInstance) identifier and a border object class (e.g. borderObjectClass) identifier. The borderObjectInstance identifier and the borderObjectClass identifier compose the Distinguished Name (DN) of sub-network B for indicating a specified sub-network. The borderObjectClass identifier indicates the class of a border object, e.g., a border cell, a border lues link, a border Iups link, a border Iur link, or any other border signaling links. In this embodiment, the borderObjectClass identifier indicates the class of a border cell. The query message is used to inquire about whether there is such a cell in sub-network A, i.e., whether an external cell pointed to by the external relation of the cell in sub-network A belongs to sub-network B indicated by the borderObjectInstance identifier. With respect to a cell, the external relation is the handover relation.

Block 202: Upon receiving the query message, the DM of sub-network A determines the class of the border object inquired about according to the borderObjectClass identifier in the query message. In this embodiment, the class of the border object is a cell. The DM of sub-network A searches all external relations (taking handover relations as an example in this embodiment) of local cells in sub-network A and determines whether an external cell pointed to by an external relation belongs to sub-network B. For example, the DM of sub-network A determines whether the DN of an external cell pointed to by an external relation includes the DN of sub-network B contained in the query message (i.e. the borderObjectInstance), i.e., determines whether the DN of an external cell matches the borderObjectInstance. If the DN of an external cell matches the borderObjectInstance, the DM of sub-network A records the DN of the external cell and returns a success response to sub-network B, and Block 203 is performed. The success response indicates that at least one external relation of at least one cell in sub-network A points to a cell in sub-network B. If the DN of an external cell does not match the borderObjectInstance, the DM of sub-network A returns a failure response indicating that none of the external relations of the cells in sub-network A points to any border object of the same class in sub-network B, i.e. any border cell, and the process is terminated.

It is known to those skilled in the art that all of the external relations of local cells are pre-configured. The source cells of the external relations are cells in the local sub-network and the target cells of the external relations are cells in the local sub-network or cells in neighboring sub-networks, i.e. external cells.

In order to be compatible with 3GPP specification, the operation in Block 201 and Block 202 is a supplementary operation provided in this embodiment of the present invention for ERIRP interface of 3GPP and is called as the operation of query for whether there is border Network Resource Model (NRM) at EPRIP interface, i.e. the operation of EPIRP::hasAnySourceBorderNRM (borderObjectInstance: string(idl), borderObjectClass: string(idl)). The DMs of the sub-networks may invoke the operation over a standard EPERP interface.

Block 203: The DM of sub-network A sends a notification subscription message to the DM of sub-network B to subscribe to a configuration change notification of the external cell recorded in Block 202.The notification subscription message contains the DN of the external cell recorded in Block 202. Sub-network B confirms the notification subscription message upon receiving the notification subscription message.

The operation in Block 203 is implemented by the Subscription operation of the Notification IRP class in the 3GPP Interface between the Networks, i.e., the operation of 3GPP Notification::subscribe. The filtering parameter in the Subscription operation is designated to indicate the recorded external cell of sub-network B. The configuration change notification subscribed to includes a notification published at 3GPP KernelCM IRP, for example: object creation notification (i.e. notifyObjectCreation), object deletion notification (i.e. notifyObjectDeletion), object attribute value change notification (i.e. notifyAttributeValueChange), object state change notification (i.e. notifyStateChange), configuration information synchronization recommended notification (i.e. notifyCMSynchronizationRecommended), etc.

Blocks 204-205: when the configuration information of the border cell in sub-network B changes, wherein the configuration change notification is subscribed to from the border cell, the DM of sub-network B sends to the DM of sub-network A a corresponding notification containing both the DN of the border cell of which the configuration information changes and the changed configuration information. The DM of sub-network A, upon receiving the corresponding notification, searches in sub-network A for the external relation corresponding to the border cell according to the DN of the border cell contained in the corresponding notification, and updates the border configuration information of the external relation according to the changed configuration information contained in the corresponding notification.

For example, when the attribute value of a border cell in sub-network B changes, sub-network B sends a notifyAttributeValueChange notification to sub-network A if sub-network A has subscribed to the KernelCM IRP notification of the border cell. Upon receiving the notifyAttributeValueChange notification, sub-network A updates the corresponding external relation of corresponding border cell in sub-network A to maintain the external relation between sub-network A and sub-network B.

For another example, when sub-network B deletes a border cell in sub-network B, sub-network B sends a notifyObjectDeletion notification to sub-network A if sub-network A has subscribed to the KernelCM IRP notification of the border cell which is deleted. Upon receiving the notifyObjectDeletion notification, sub-network A deletes the corresponding external relation of corresponding border cell in sub-network A. Moreover, sub-network A may further update the subscription to the KernelCM IRP notification from sub-network B, i.e., sub-network A may no longer subscribe to the KernelCM IRP notification of the deleted border cell.

In the embodiment above, when the borderObjectClass specified in the query message in Block 201 is a link, the border object is a link, and the external relation between border objects is information transmission relation.

In the embodiment above, the borderObjectInstance identifier in the query message in Block 201 may be the DN of a specified border object in sub-network B. In Block 202, upon determining the class of the border object inquired about according to the borderObjectClass identifier in the query message, the DM of sub-network A searches all external relations of all cells in sub-network A and determines whether an external cell pointed to by an external relation is the borderObjectInstance in the query message. In other words, the DM of sub-network A determines whether the DN of an external cell pointed to by an external relation is the DN of the specified border cell in sub-network B (i.e. the borderObjectInstance) contained in the query message. If the external cell is the borderObjectInstance, the DM of sub-network A records the DN of the external cell and returns a success response to sub-network B, indicating that at least one external relation of at least one cell in sub-network A points to the specified border cell in sub-network B, and Block 203 is performed. If the external cell is not the borderObjectInstance, the DM of sub-network A returns a failure response to sub-network B, indicating that none of the external relations of the cells in sub-network A points to the specified border cell in sub-network B, and the process is terminated.

In the embodiment above, the unidirectional relation between a border object in sub-network A and a border object in sub-network B is described, i.e., sub-network A is the initiator of the external relation and sub-network B is the terminal of the external relation. However, in practical applications, the external relation between different sub-networks may be bidirectional. In other words, sub-network A may be both an initiator of an external relation to a border object and a terminal of another external relation from another border object. The method in accordance with an embodiment of the present invention is also applicable to both directions of the bidirectional external relation.

In the embodiment above, the terminal of the external relation between border objects, i.e. sub-network B, sends a query message containing the identifier of the sub-network B to the initiator of the external relation between border objects in an unsolicited manner, e.g. to sub-network A. According to another embodiment of the present invention, sub-network A may initiatively request for the identifier information of sub-network B from sub-network B.

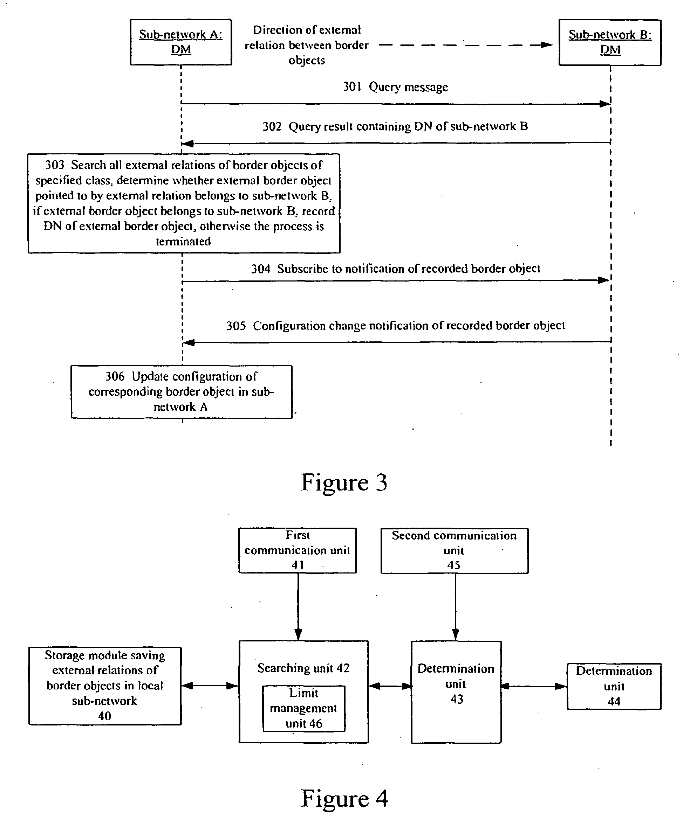

Figure 3 is a flowchart illustrating the method for searching for a target border object in accordance with an embodiment of the present invention. As shown in Figure 3, the method is described as follows.

Blocks 301-302: The DM of sub-network A actively sends a query message for obtaining the DN of sub-network B and the class of a border object; upon receiving the query message, the DM of sub-network B returns an inquiry result containing the DN of sub-network B, i.e., the borderObjectInstance and the class of a border object (supposing that the class of a border object in this embodiment is still a cell).

In Blocks 301-302, the DM of sub-network A may directly invoke the operation of getting managed object attributes (i.e. the operation of getMOAttributes) at the Basic Configuration Management IRP (BasicCMIRP) to initiate an inquiry request to the DM of sub-network B. The filtering parameter of the operation of getMOAttributes is the DN of a sub-network.

Then Blocks 303 to 306 are performed, which are similar to Blocks 202 to 205 correspondingly and are described below.

Block 303: Upon receiving the inquiry result, the DM of sub-network A inquires about a border object corresponding to the class of the border object, supposing that the class of the border object is a cell in this embodiment. The DM of sub-network A searches all external relations (i.e. handover relations) of cells in sub-network A and determines whether an external cell pointed to by an external relation belongs to sub-network B. In other words, the DM of sub-network A determines whether the DN of an external cell pointed to by the external relation includes the DN of sub-network B (i.e. borderObjectInstance) contained in the inquiry result. If the DN of an external cell pointed to by the external relation includes the DN of sub-network B, the DM of sub-network A records the DN of the external cell and returns a success response to sub-network B, indicating that at least one external relation of at least one cell in sub-network A points to a border cell in sub-network B, and Block 304 is performed. If the DN of an external cell pointed to by the external relation does not include the DN of sub-network B, the DM of sub-network A returns a failure response to sub-network B, indicating that none of the external relations of the cells in sub-network A points to any border object of the same class in sub-network B, i.e., a border cell, and the process is terminated.

Block 304: Sub-network A sends a notification subscription message to sub-network B to subscribe to the configuration change notification of the external cell recorded in Block 303, and the notification subscription message contains the DN of the external cell recorded in Block 303. Sub-network B confirms the notification subscription message upon receiving the notification subscription message.

Blocks 305-306: When the configuration information of the border cell from which the configuration change notification is subscribed to changes in sub-network B, the DM of sub-network B sends to the DM of sub-network A a corresponding notification containing both the DN of the border cell of which the configuration information changes and the changed configuration information. Upon receiving the corresponding notification, the DM of sub-network A searches in sub-network A for the external relation corresponding to the border cell according to the DN of the border cell contained in the corresponding notification, and the DM of sub-network A updates the border configuration information of the external relation according to the changed configuration information contained in the corresponding notification.

In addition, the 3GPP operations used in embodiments of the present invention are similar to the operations published by 3GPP, except that the two parties of the operations are different from that of 3GPP, the two parties of the 3GPP operations are DMs of two sub-networks in embodiments of the present invention.

An apparatus for searching for a target border object in a relevant sub-network is provided in accordance with an embodiment of the present invention.

As shown in Figure 4, the apparatus includes:
a first communication unit 41, for obtaining identifier information of a sub-network related to a local sub-network;
a searching unit 42, for searching external relations of border objects in the local sub-network, where the external relations are saved in a storage module 40 in the local sub-network;
a determination unit 43, for determining whether the external border object pointed to by the external relation belongs to the second sub-network based on the identifier information, e.g. whether an identifier parameter of an external border object pointed to by an external relation matches the identifier information of the relevant sub-network; and
a determination unit 44, for determining, based on a determination result generated by the determination unit 43, whether the external border object pointed to by the external relation of a border object in the local sub-network is a target border object of the local sub-network in the relevant sub-network.

The apparatus provided in an embodiment of the present invention further includes: a second communication unit 45 for obtaining, by the local sub-network, the border object class in the relevant sub-network.

The searching unit 42 includes: a limit management unit 46, for limiting, before searching the external relations of border objects in the local sub-network, the class of the border objects to be searched to the border object class.

The identifier information of the relevant sub-network may be the DN of the relevant sub-network or the DN of the border object in the relevant sub-network.

The border object may be a cell and the external relation may be a handover relation. Or the border object may be a link between sub-networks and the external relation may be information transmission relation.

The foregoing are only preferred embodiments of the present invention. The protection scope of the present invention, however, is not limited to the above description , but is defined by the appended claims.

## Claims

1. A method for searching, by a first sub-network, for a target border object in a second sub-network, the method comprising:
obtaining, by a Device Manager, DM, of the first sub-network, identifier information of the second sub-network (201; 301, 302) from the second sub-network (201; 301, 302), wherein the first sub-network and the second sub-network have neighboring relations with each other and are configured with corresponding network management configuration information called border configuration information managed by the corresponding DM of each sub-network;
searching, by the DM of the first sub-network, for all external relations of all border objects of the first sub-network(202; 303), wherein a border object of the first sub-network is an object of the first sub-network having external relations to one or more managed target objects of the first sub-network or other sub-networks;
determining that an external border object pointed to by the external relation is a target border object of the first sub-network in the second sub-network by determining that an identifier parameter of the external border object matches the identifier information of the second sub-network(202; 303);
sending, by the DM of the first sub-network, to the DM of the second sub-network a request for subscribing to a configuration change notification of the target border object(203; 304);
receiving, by the DM of the first sub-network, the configuration change notification sent by the second sub-network after the second sub-network confirms the request for subscribing and configuration of the target border object in the second sub-network changes(204; 305); and
updating, by the DM of the first sub-network, based on the configuration change notification, the configuration of the target border object of the external relation of the corresponding border object in the first sub-network(205; 306).

2. The method of claim 1, further comprising:
obtaining, by the DM of the first sub-network, a border object class(202; 302); and
determining that the class of the border object of the first sub-network to be queried of is the border object class.

3. The method of claim 2, wherein the obtaining identifier information of the second sub-network and the obtaining the border object class comprise:
obtaining the identifier information of the second sub-network and the border object class which are contained in a query message sent by the second sub-network to the first sub-network.

4. The method of claim 2, wherein the obtaining identifier information of a second sub-network and the determining that an external border object pointed to by the external relation is a target border object of the first sub-network in the second sub-network are performed by an operation of query for whether there is any border network resource model at Entry Point Integration Reference Point, EPIRP, interface of the 3GPP interface between the networks, Itf-N.

5. The method of claim 2, wherein the obtaining identifier information of the second sub-network and the obtaining the border object class comprise:
sending, by the DM of the first sub-network, to a DM of the second sub-network a query message for the identifier information of the second sub-network and the border object class(301); and
receiving, by the DM of the first sub-network, a response message including the identifier information of the second sub-network and the border object class sent by the DM of the second sub-network in response to the query message(302).

6. The method of claim 1 or 2, wherein the first sub-network is an initiator of the external relation of the border object, and the second sub-network is a terminal of the external relation of the border object.

7. The method of claim 1, wherein the identifier parameter of the external border object pointed to by the external relation matches the identifier information of the second sub-network if the identifier parameter of the external border object pointed to by the external relation includes the identifier information of the second sub-network.

8. The method of any of claims 1 to 7, wherein the identifier information of the second sub-network is a Distinguished Name, DN, of the second sub-network; or
the identifier information of the second sub-network is a Distinguished Name, DN, of a border object in the second sub-network;
wherein the DN is a borderObjectInstance identifier.

9. The method of any of claims 1 to 8, wherein the border object is a cell and the external relation is a handover relation; or
the border object is a link between the first sub-network and the second sub-network and the external relation is an information transmission relation.

10. An apparatus for searching for a target border object in a second sub-network, the apparatus comprising:
a searching unit(42), configured to search for all external relations of all border objects of a first sub-network, wherein a border object of the first sub-network is an object of the first sub-network having external relations to one or more managed target objects of the first sub-network or other sub-networks;
a communication unit(41), configured to obtain identifier information of the second sub-network from the second sub-network, wherein the first sub-network and the second sub-network have neighboring relations with each other and are configured with corresponding network management configuration information called border configuration information managed by the corresponding DM of each sub-network;
a first determination unit(43), configured to determine whether an identifier parameter of an external border object pointed to by the external relation matches the identifier information of the second sub-network; and
a second determination unit(44), configured to determine, based on a determination result of the first determination unit(43), whether the external border object pointed to by the external relation of the border object in the first sub-network is a target border object of the first sub-network in the second sub-network;
a sending unit, configured to send to the DM of the second sub-network a request for subscribing to a configuration change notification of the target border object;
a receiving unit, configured to receive the configuration change notification sent by the second sub-network after the second sub-network confirms the request for subscribing and configuration of the target border object in the second sub-network changes; and
an updating unit, configured to update the configuration of the target border object of the external relation of the corresponding border object in the first sub-network, based on the configuration change notification.

11. The apparatus of claim 10, further comprising:
a storage module(40) connected to the searching unit(42), configured to save external relations.

12. The apparatus of claim 10 or 11, further comprising:
a second communication unit(45), configured to obtain a border object class; wherein
the searching unit(42) comprises: a limit management unit(46) configured to limit the class of the border object to be queried of to the border object class.

13. The apparatus of claim 10, 11 or 12, wherein the identifier information of the second sub-network is a Distinguished Name, DN, of the second sub-network; or
the identifier information of the second sub-network is a Distinguished Name, DN, of a border object in the second sub-network;
wherein the DN is a borderObjectInstance identifier.

14. The apparatus of claim 10, 11 or 12, wherein
the border object is a cell, and the external relation is a handover relation; or
the border object is a link between the first sub-network and the second sub-network, and the external relation is an information transmission relation.

## Patentansprüche

1. Verfahren zum Suchen durch ein erstes Unternetz nach einem Zielgrenzobjekt in einem zweiten Unternetz, wobei das Verfahren Folgendes umfasst:
Erhalten durch einen Vorrichtungsmanager, DM (Device Manager), des ersten Unternetzes von Identifiziererinformationen des zweiten Unternetzes (201; 301, 302) von dem zweiten Unternetz (201; 301, 302), wobei das erste Unternetz und das zweite Unternetz untereinander Nachbarbeziehungen haben und mit entsprechenden Netzmanagement-Konfigurationsinformationen, die Grenzkonfigurationsinformationen genannt werden und durch den entsprechenden DM jedes Unternetzes gemanagt werden, konfiguriert sind;
Suchen durch den DM des ersten Unternetzes nach allen externen Beziehungen sämtlicher Grenzobjekte des ersten Unternetzes (202; 303), wobei ein Grenzobjekt des ersten Unternetzes ein Objekt des ersten Unternetzes ist, das externe Beziehungen zu einem oder mehreren gemanagten Zielobjekten des ersten Unternetzes oder anderer Unternetze hat;
Bestimmen, dass ein externes Grenzobjekt, auf das die externe Beziehung zeigt, ein Zielgrenzobjekt des ersten Unternetzes in dem zweiten Unternetz ist, durch Bestimmen, dass ein Identifiziererparameter des externen Grenzobjekts mit den Identifiziererinformationen des zweiten Unternetzes (202; 303) übereinstimmt;
Senden durch den DM des ersten Unternetzes zu dem DM des zweiten Unternetzes einer Anforderung zum Teilnehmen an einer Konfigurationsänderungsmeldung des Zielgrenzobjekts (203; 304);
Empfangen durch den DM des ersten Unternetzes der Konfigurationsänderungsmeldung, die durch das zweite Unternetz gesendet wird, nachdem das zweite Unternetz die Anforderung zum Teilnehmen bestätigt und die Konfiguration des Zielgrenzobjekts in dem zweiten Unternetz (204; 305) sich ändert; und
Aktualisieren durch den DM des ersten Unternetzes auf der Grundlage der Konfigurationsänderungsmeldung der Konfiguration des Zielgrenzobjekts der externen Beziehung des entsprechenden Grenzobjekts in dem ersten Unternetz (205; 306).

2. Verfahren nach Anspruch 1, das ferner Folgendes umfasst:
Erhalten durch den DM des ersten Unternetzes einer Grenzobjektklasse (202; 302); und
Bestimmen, dass die Klasse des abzufragenden Grenzobjekts des ersten Unternetzes die Grenzobjektklasse ist.

3. Verfahren nach Anspruch 2, wobei das Erhalten von Identifiziererinformationen des zweiten Unternetzes und das Erhalten der Grenzobjektklasse Folgendes umfassen:
Erhalten der Identifiziererinformationen des zweiten Unternetzes und der Grenzobjektklasse, die in einer Abfragenachricht enthalten sind, die durch das zweite Unternetz zu dem ersten Unternetz gesendet wird.

4. Verfahren nach Anspruch 2, wobei das Erhalten von Identifiziererinformationen eines zweiten Unternetzes und das Bestimmen, dass ein externes Grenzobjekt, auf das die externe Beziehung zeigt, ein Zielgrenzobjekt des ersten Unternetzes in dem zweiten Unternetz ist, durch eine Operation des Abfragens, ob irgendein Grenz-Netzbetriebsmittelmodell an einer Eintrittspunktintegrations-Referenzpunktschnittstelle, EPIRP-Schnittstelle, der 3GPP-Schnittstelle zwischen den Netzen, Itf-N, vorhanden ist, ausgeführt werden.

5. Verfahren nach Anspruch 2, wobei das Erhalten von Identifiziererinformationen des zweiten Unternetzes und das Erhalten der Grenzobjektklasse Folgendes umfassen:
Senden durch den DM des ersten Unternetzes zu einem DM des zweiten Unternetzes einer Nachricht des Abfragens von den Identifiziererinformationen des zweiten Unternetzes und der Grenzobjektklasse (301); und
Empfangen durch den DM des ersten Unternetzes einer Antwortnachricht, die die Identifiziererinformationen des zweiten Unternetzes und die Grenzobjektklasse, die von dem DM des zweiten Unternetzes als Antwort auf die Abfragenachricht (302) gesendet werden, enthält.

6. Verfahren nach Anspruch 1 oder 2, wobei das erste Unternetz ein Ausgangspunkt der externen Beziehung des Grenzobjekts ist und das zweite Unternetz ein Endpunkt der externen Beziehung des Grenzobjekts ist.

7. Verfahren nach Anspruch 1, wobei der Identifiziererparameter des externen Grenzobjekts, auf das die externe Beziehung zeigt, mit den Identifiziererinformationen des zweiten Unternetzes übereinstimmt, falls der Identifiziererparameter des externen Grenzobjekts, auf das die externe Beziehung zeigt, die Identifiziererinformationen des zweiten Unternetzes enthält.

8. Verfahren nach einem der Ansprüche 1 bis 7, wobei die Identifiziererinformationen des zweiten Unternetzes ein unterschiedener Name, DN (Distinguished Name), des zweiten Unternetzes sind; oder
die Identifiziererinformationen des zweiten Unternetzes ein unterschiedener Name, DN, eines Grenzobjekts in dem zweiten Unternetz sind;
wobei der DN ein Grenzobjektinstanz-Identifizierer ist.

9. Verfahren nach einem der Ansprüche 1 bis 8, wobei das Grenzobjekt eine Zelle ist und die externe Beziehung eine Weiterreichungsbeziehung ist; oder
das Grenzobjekt eine Übertragungsstrecke zwischen dem ersten Unternetz und dem zweiten Unternetz ist und die externe Beziehung eine Informationsübertragungsbeziehung ist.

10. Vorrichtung zum Suchen nach einem Zielgrenzobjekt in einem zweiten Unternetz, wobei die Vorrichtung Folgendes umfasst:
eine Sucheinheit (42), die konfiguriert ist, nach allen externen Beziehungen sämtlicher Grenzobjekte eines ersten Unternetzes zu suchen, wobei ein Grenzobjekt des ersten Unternetzes ein Objekt des ersten Unternetzes ist, das externe Beziehungen zu einem oder mehreren gemanagten Zielobjekten des ersten Unternetzes oder anderer Unternetze hat;
eine Kommunikationseinheit (41), die konfiguriert ist, Identifiziererinformationen des zweiten Unternetzes von dem zweiten Unternetz zu erhalten, wobei das erste Unternetz und das zweite Unternetz untereinander Nachbarbeziehungen haben und mit entsprechenden Netzmanagement-Konfigurationsinformationen, die Grenzkonfigurationsinformationen genannt werden, die durch den entsprechenden DM jedes Unternetzes gemanagt werden, konfiguriert sind;
eine erste Bestimmungseinheit (43), die konfiguriert ist, zu bestimmen, ob ein Identifiziererparameter eines externen Grenzobjekts, auf das die externe Beziehung zeigt, mit den Identifiziererinformationen des zweiten Unternetzes übereinstimmt; und
eine zweite Bestimmungseinheit (44), die konfiguriert ist, auf der Grundlage eines Bestimmungsergebnisses der ersten Bestimmungseinheit (43) zu bestimmen, ob das externe Grenzobjekt, auf das die externe Beziehung des Grenzobjekts in dem ersten Unternetz zeigt, ein Zielgrenzobjekt des ersten Unternetzes in dem zweiten Unternetz ist;
eine Sendeeinheit, die konfiguriert ist, zu dem DM des zweiten Unternetzes eine Anforderung zum Teilnehmen an einer Konfigurationsänderungsmeldung des Zielgrenzobjekts zu senden;
eine Empfangseinheit, die konfiguriert ist, die Konfigurationsänderungsmeldung, die durch das zweite Unternetz gesendet wird, nachdem das zweite Unternetz die Anforderung zum Teilnehmen bestätigt und die Konfiguration des Zielgrenzobjekts in dem zweiten Unternetz sich ändert, zu empfangen; und
eine Aktualisierungseinheit, die konfiguriert ist, die Konfiguration des Zielgrenzobjekts der externen Beziehung des entsprechenden Grenzobjekts in dem ersten Unternetz auf der Grundlage der Konfigurationsänderungsmeldung zu aktualisieren.

11. Vorrichtung nach Anspruch 10, die ferner Folgendes umfasst:
ein Speichermodul (40), das mit der Sucheinheit (42) verbunden ist und konfiguriert ist, externe Beziehungen zu sichern.

12. Vorrichtung nach Anspruch 10 oder 11, die ferner Folgendes umfasst:
eine zweite Kommunikationseinheit (45), die konfiguriert ist, eine Grenzobjektklasse zu erhalten; wobei
die Sucheinheit (42) Folgendes umfasst: eine Einschränkungsmanagementeinheit (46), die konfiguriert ist, die Klasse des abzufragenden Grenzobjekts auf die Grenzobjektklasse einzuschränken.

13. Vorrichtung nach Anspruch 10, 11 oder 12, wobei die Identifiziererinformationen des zweiten Unternetzes ein unterschiedener Name, DN, des zweiten Unternetzes sind; oder
die Identifiziererinformationen des zweiten Unternetzes ein unterschiedener Name, DN, eines Grenzobjekts in dem zweiten Unternetz sind;
wobei der DN ein Grenzobjektinstanz-Identifizierer ist.

14. Vorrichtung nach Anspruch 10, 11 oder 12, wobei
das Grenzobjekt eine Zelle ist und die externe Beziehung eine Weiterreichungsbeziehung ist; oder
das Grenzobjekt eine Übertragungsstrecke zwischen dem ersten Unternetz und dem zweiten Unternetz ist und die externe Beziehung eine Informationsübertragungsbeziehung ist.

## Revendications

1. Procédé permettant de rechercher, par un premier sous-réseau, un objet limite cible dans un deuxième sous-réseau, le procédé comprenant les étapes suivantes :
obtenir, par un gestionnaire de dispositif, DM, du premier sous-réseau, des informations d'identifiant du deuxième sous-réseau (201 ; 301, 302) à partir du deuxième sous-réseau (201 ; 301, 302), le premier sous-réseau et le deuxième sous-réseau ayant des relations de voisinage entre eux et étant configurés avec des informations de configuration de gestion de réseau correspondantes appelées des informations de configuration de limite gérées par le DM correspondant de chaque sous-réseau ;
rechercher, par le DM du premier sous-réseau, toutes les relations externes de tous les objets limite du premier sous-réseau (202 ; 303), un objet limite du premier sous-réseau étant un objet du premier sous-réseau ayant des relations externes avec un ou plusieurs objets cible gérés du premier sous-réseau ou d'autres sous-réseaux ;
déterminer qu'un objet limite externe pointé par la relation externe est un objet limite cible du premier sous-réseau dans le deuxième sous-réseau en déterminant qu'un paramètre d'identifiant de l'objet limite externe correspond aux informations d'identifiant du deuxième sous-réseau (202 ; 303) ;
envoyer, par le DM du premier sous-réseau, au DM du deuxième sous-réseau une requête de souscription à une notification de changement de configuration de l'objet limite cible (203 ; 304) ;
recevoir, par le DM du premier sous-réseau, la notification de changement de configuration envoyée par le deuxième sous-réseau une fois que le deuxième sous-réseau a confirmé que la requête de souscription et de configuration de l'objet limite cible dans le deuxième sous-réseau change (204 ; 305) ; et
mettre à jour, par le DM du premier sous-réseau, sur la base de la notification de changement de configuration, la configuration de l'objet limite cible de la relation externe de l'objet limite correspondant dans le premier sous-réseau (205 ; 306).

2. Procédé selon la revendication 1, comprenant en outre les étapes suivantes :
obtenir, par le DM du premier sous-réseau, une classe d'objets limite (202 ; 302) ; et
déterminer que la classe de l'objet limite du premier sous-réseau devant être interrogé est la classe d'objets limite.

3. Procédé selon la revendication 2, dans lequel l'étape consistant à obtenir les informations d'identifiant du deuxième sous-réseau et l'étape consistant à obtenir la classe d'objets limite comprennent :
obtenir les informations d'identifiant du deuxième sous-réseau et la classe d'objets limite qui sont contenues dans un message de requête envoyé par le deuxième sous-réseau au premier sous-réseau.

4. Procédé selon la revendication 2, dans lequel l'étape consistant à obtenir les informations d'identifiant d'un deuxième sous-réseau et l'étape consistant à déterminer qu'un objet limite externe pointé par la relation externe est un objet limite cible du premier sous-réseau dans le deuxième sous-réseau sont exécutées par une opération de requête permettant de déterminer s'il existe un modèle de ressources réseau de limite au niveau de l'interface de point de référence d'intégration de point d'entrée, EPIRP, de l'interface 3GPP entre les réseaux, Itf-N.

5. Procédé selon la revendication 2, dans lequel l'étape consistant à obtenir les informations d'identifiant du deuxième sous-réseau et l'étape consistant à obtenir la classe d'objets limite comprennent les étapes suivantes :
envoyer, par le DM du premier sous-réseau, à un DM du deuxième sous-réseau un message de requête demandant les informations d'identifiant du deuxième sous-réseau et la classe d'objets limite (301) ; et
recevoir, par le DM du premier sous-réseau, un message de réponse contenant les informations d'identifiant du deuxième sous-réseau et la classe d'objets limite envoyées par le DM du deuxième sous-réseau en réponse au message de requête (302).

6. Procédé selon la revendication 1 ou 2, dans lequel le premier sous-réseau est un initiateur de la relation externe de l'objet limite, et le deuxième sous-réseau est un terminal de la relation externe de l'objet limite.

7. Procédé selon la revendication 1, dans lequel le paramètre d'identifiant de l'objet limite externe pointé par la relation externe correspond aux informations d'identifiant du deuxième sous-réseau si le paramètre d'identifiant de l'objet limite externe pointé par la relation externe contient les informations d'identifiant du deuxième sous-réseau.

8. Procédé selon l'une quelconque des revendications 1 à 7, dans lequel les informations d'identifiant du deuxième sous-réseau sont un nom distinctif, DN, du deuxième sous-réseau; ou
les informations d'identifiant du deuxième sous-réseau sont un nom distinctif, DN, d'un objet limite dans le deuxième sous-réseau ;
le DN étant un identifiant d'instance d'objet limite.

9. Procédé selon l'une quelconque des revendications 1 à 8, dans lequel l'objet limite est une cellule et la relation externe est une relation de transfert intercellulaire ; ou l'objet limite est une liaison entre le premier sous-réseau et le deuxième sous-réseau et la relation externe est une relation de transmission d'informations.

10. Appareil permettant de rechercher un objet limite cible dans un deuxième sous-réseau, l'appareil comprenant :
une unité de recherche (42), configurée pour rechercher toutes les relations externes de tous les objets limite d'un premier sous-réseau, un objet limite du premier sous-réseau étant un objet du premier sous-réseau ayant des relations externes avec un ou plusieurs objets cible gérés du premier sous-réseau ou d'autres sous-réseaux ;
une unité de communication (41), configurée pour obtenir des informations d'identifiant du deuxième sous-réseau à partir du deuxième sous-réseau, le premier sous-réseau et le deuxième sous-réseau ayant des relations de voisinage entre eux et étant configurés avec des informations de configuration de gestion de réseau correspondantes appelées des informations de configuration de limite gérées par le DM correspondant de chaque sous-réseau ;
une première unité de détermination (43), configurée pour déterminer si un paramètre d'identifiant d'un objet limite externe pointé par la relation externe correspond aux informations d'identifiant du deuxième sous-réseau ; et
une deuxième unité de détermination (44), configurée pour déterminer, sur la base d'un résultat de détermination de la première unité de détermination (43), si l'objet limite externe pointé par la relation externe de l'objet limite dans le premier sous-réseau est un objet limite cible du premier sous-réseau dans le deuxième sous-réseau ;
une unité émettrice, configurée pour envoyer au DM du deuxième sous-réseau une requête de souscription à une notification de changement de configuration de l'objet limite cible ;
une unité de réception, configurée pour recevoir la notification de changement de configuration envoyée par le deuxième sous-réseau une fois que le deuxième sous-réseau a confirmé que la requête de souscription et de configuration de l'objet limite cible dans le deuxième sous-réseau change ; et
une unité de mise à jour, configurée pour mettre à jour la configuration de l'objet limite cible de la relation externe de l'objet limite correspondant dans le premier sous-réseau, sur la base de la notification de changement de configuration.

11. Appareil selon la revendication 10, comprenant en outre :
un module de stockage (40) connecté à l'unité de recherche (42), configuré pour sauvegarder des relations externes.

12. Appareil selon la revendication 10 ou 11, comprenant en outre :
une deuxième unité de communication (45), configurée pour obtenir une classe d'objets limite ; l'unité de recherche (42) comportant : une unité de gestion de limites (46) configurée pour limiter la classe de l'objet limite devant être interrogé à la classe d'objets limite.

13. Appareil selon la revendication 10, 11 ou 12, dans lequel les informations d'identifiant du deuxième sous-réseau sont un nom distinctif, DN, du deuxième sous-réseau ; ou
les informations d'identifiant du deuxième sous-réseau sont un nom distinctif, DN, d'un objet limite dans le deuxième sous-réseau ;
le DN étant un identifiant d'instance d'objet limite.

14. Appareil selon la revendication 10, 11 ou 12, dans lequel
l'objet limite est une cellule, et la relation externe est une relation de transfert intercellulaire ; ou
l'objet limite est une liaison entre le premier sous-réseau et le deuxième sous-réseau, et la relation externe est une relation de transmission d'informations.
